# EUROPÄISCHE PATENTANMELDUNG

(11) **EP 1 276 128 A2**
(43) Veröffentlichungstag der Anmeldung: **15.01.2003**
(21) Anmeldenummer: 02090210.2
(22) Anmeldetag: 10.06.2002
(51) Int. Cl.: H01J 9/00, B03B 9/06

(54) **Verfahren zum Zerlegen von Lampen und Vorrichtung zur Durchführung des Verfahrens**

(30) Priorität: 26.06.2001 DE 10131414
(71) Anmelder: Werec GmbH Berlin, D-15345 Hohenstein/Strausberg (DE)
(72) Erfinder: Kalisch, Joachim, 10247 Berlin (DE); Melzer, Frank, 12524 Berlin (DE); Reimer, Burkhard, 12524 Berlin (DE); Obst, Hans, 16341 Zepernick (DE); Schirmer, Bernd, 10367 Berlin (DE)
(74) Vertreter: Bröseke, Eribert, Dipl.-Ing.

(57) **Zusammenfassung**

Beim erfindungsgemäßen Verfahren werden bei Lampen zur Rückgewinnung der einzelnen Lampenteile diese einer Fördereinrichtung zugeführt, dort jede Lampe am Sockelteil und/oder Außenkolben bzw. Entladungsgefäß durch eine Halteeinrichtung erfasst und so den einzelnen Arbeitsstationen, wie Glaserkennung des Entladungsgefäßes, spezifischen Abtrennstationen für die Trennung in Sockelteil und Glasteil zugeführt.

Die erfindungsgemäßen Haltevorrichtungen bestehen aus einem doppelwandigen elastischen Hohlgefäß, vorzugsweise Hohlzylinder, das sich durch unter Druck stehende Gase oder Flüssigkeiten den Außenkonturen des Gegenstandes, bei Lampen dem Sockelteil, dem Außenkolben bzw. dem Entladungsgefäß anpasst und die Lampe dadurch festhält.

Bei einer anderen Variante der Haltevorrichtung besteht diese aus Platten mit elastischer Innenfläche oder aus mit unter Druck stehenden Gasen oder Flüssigkeiten gefüllten Kissen. Diese werden unter Einschluss des zu haltenden Gegenstandes, z.B. eine Lampe, aufeinanderzu geführt.

## Beschreibung

Die Erfindung betrifft ein Verfahren zum Zerlegen von Lampen und des sortenreinen Trennens der Bestandteile von Lampen nach dem Oberbegriff des Anspruchs 1 und eine Vorrichtung zum Halten der aufzubereitenden Gegenstände, wie Lampen oder Teilen davon.

Der Einsatz von Entladungslampen, insbesondere von kompakten Leuchtstofflampen, nimmt, um Energie einzusparen, an Bedeutung und Umfang ständig zu.

Im Wesentlichen sind Entladungslampen gleichartig aufgebaut und bestehen aus den Materialien Glas, Metalle, Plastik sowie einigen speziellen Stoffen und Elementen, die für die Lichterzeugung notwendig sind. Der Aufbau sei am Beispiel einer Kompakt-Leuchtstofflampe KLL beschrieben. Sie besteht aus Sockelteil und Entladungsgefäß, das gegebenenfalls von einem Außenkolben aus Glas oder Kunststoff, der innen mit einer lichtstreuenden Beschichtung versehen sein kann, umgeben ist. Das Sockelteil besteht gewöhnlich aus Kunststoff und Metall und umhüllt eine Zünd- und/oder Betriebsvorrichtung für die Lampe, z. B. ein elektronisches Vorschaltgerät. Das innen mit Leuchtstoffpulver beschichtete Entladungsgefäß besteht aus Glas, das bei unterschiedlichen Lampentypen unterschiedliche Zusammensetzung aufweist. Sockelteil, Entladungsgefäß und Außenkolben haben weiterhin bei den unterschiedlichen Lampensorten unterschiedliche Formen und Größen.

Auch enthalten solche Entladungslampen beispielsweise das umweltrelevante Element Quecksilber. Für ausgediente Lampen ist deshalb eine umweltverträgliche Entsorgung der Bestandteile der Lampen dringend geboten. Zudem ist es ökologisch und ökonomisch sinnvoll, die in den Lampen enthaltenen Wertstoffe im Sinne einer Kreislaufwirtschaft einer Wiederverwertung zuzuführen.

Die Verwertung, das heißt eine wirtschaftliche Rückgewinnung von Wertstoffen aus der Lampenmasse ausgedienter Lampen und die umweltverträgliche Entsorgung der umweltrelevanten Stoffe setzt ein Zerlegen der Lampen voraus. Bisher werden solche Lampen, insbesondere KLL, noch im Wesentlichen mit dem Hausmüll entsorgt oder bestenfalls geschreddert und auf Sondermülldeponien abgelagert und wegen der relativ hohen Kosten nur in sehr geringem Umfang manuell zerlegt und verwertet. Der stetige Anstieg der Anzahl der zu verwertenden Lampen, speziell der kompakten Leuchtstofflampen, erfordert ein sicheres und wirtschaftlich arbeitendes automatisches Zerlegeverfahren.

Aus der DE 4 219 044 A1 ist ein Verfahren zur Rückgewinnung der Einsatzmaterialen von kompakten Niederdrucklampen bekannt, wobei zuerst der Außenkolben vom Sockel getrennt und dann die Lampe weiter zerlegt wird. Der Rohrglasbruch, Bleiglasbruch, Leuchtstoff, Kunststoff, das verunreinigte Glas der Rohrverbindungsstücke werden getrennt erfasst, zerkleinert aufbereitet und sortenrein abgelegt.

Der Nachteil dieses Verfahrens besteht aber darin, dass eine automatische Erfassung unterschiedlicher Wertstoffe und insbesondere der Glassorte nicht möglich ist.

Ebenso müssen bei einer Änderung des Lampentyps die Bearbeitungswerkzeuge neu eingestellt oder umgerüstet werden. Ein schnelles flexibles Recycling unterschiedlicher Lampentypen ist nicht gegeben.

Des weiteren ist aus der DE 4 302 008 A1 ein Verfahren zur Aufbereitung von verbrauchten Kompaktleuchtstofflampen bekannt. Die Lampen werden vor Einbringen in den Aufbereitungsprozess auf einer Aufnahmevorrichtung sortiert und sortenrein verarbeitet. Es werden nur Lampen recycelt die äußerlich intakt sind.

Der Erfindung liegt die Aufgabe zugrunde, ein automatisches Verfahren zum effektiven Aufarbeiten der geometrischen Vielfalt von Gebrauchsgegenständen zu schaffen und soll an der Aufbereitung von kompakten Leuchtstofflampen für deren Wertstoff-Recycling und zur umweltverträglichen Entsorgung der umweltrelevanten Stoffe näher beschrieben werden, sowie eine flexible Vorrichtung zur Halterung der aufzubereitenden Gegenstände, wie Lampen, zur Verfügung zu stellen.

Unter dem Begriff Lampen sollen dabei alle recycelbaren Lampen erfasst werden, zum Beispiel Glühlampen, Quecksilberdampf-Niederdrucklampen wie lineare, ring- und u-förmige Leuchtstofflampen sowie Kompaktleuchtstofflampen, Hochdruck-Entladungslampen wie Quecksilberdampf-Hochdrucklampen, Natriumdampf-Hochdrucklampen sowie Halogen-Metalldampflampen, Natriumdampf-Niederdrucklampen usw. Solche ausgedienten Lampen gibt es mit, als auch ohne Außenkolben aus Glas oder Plastik bzw. mit defektem oder losem Entladungsgefäß, sowie auch mit Resten oder mit gänzlich fehlendem Außenkolben und/oder Entladungsgefäß.
Erfindungsgemäß wird diese Aufgabe durch die kennzeichnenden Merkmale der Ansprüche 1 und 14 gelöst.

Beim erfindungsgemäßen Verfahren zum Zerlegen der Lampen in die Komponenten Glas, Inneneinbauten und Sockelteil, für deren Wertstoff-Recycling und zur umweltverträglichen Entsorgung der umweltrelevanten Stoffe wird jede Lampe zunächst einer Fördereinrichtung zugeführt und dort in eine erfindungsgemäße flexible Haltevorrichtung eingespannt.

Die Zuführung der Lampen zur Fördereinrichtung erfolgt gemischt als Schüttgut. Es wird dort vereinzelt und die Lampen werden sortiert den flexiblen Haltevorrichtungen zugeführt. Die Orientierung der Lampen erfolgt so, dass das Sockelteil immer in die gleiche Richtung zeigt.

Das Einspannen der Lampen erfolgt erfindungsgemäß in mindestens eine unabhängig voneinander wirkende flexible Haltevorrichtung. Dabei wird z.B. das Sockelteil von einer flexiblen Haltevorrichtung und ggf. der Außenkolben oder das Entladungsgefäß von einer weiteren flexiblen Haltevorrichtung gehalten.

In diesen flexiblen Haltevorrichtungen werden die Lampen den hintereinander angeordneten Arbeitsstationen zugeführt. Für das orientierte Einspannen der zu bearbeitenden Lampen in die flexiblen Haltevorrichtungen wird als Nullpunkt der Übergang von Außenkolben oder Entladungsgefäß zu Sockelteil gewählt. Es kann auch jeder andere Bezugspunkt als Nullpunkt gewählt werden. Auf diesen Nullpunkt werden auch die gewählten Angriffspunkte für die Bearbeitungswerkzeuge bezogen.

Vorzugsweise werden die Lampen nach der Erkennung der Plastik und/oder der Glassorte des Außenkolbens und/oder des Entladungsgefäßes schrittweise im wesentlichen in umgekehrter Reihenfolge zum Herstellungsprozess der Lampen zerlegt, wobei der Außenkolben und/oder das Entladungsgefäß an plastiksortenspezifischen und/oder glassortenspezifischen Abtrennstationen vom Sockelteil getrennt und zerkleinert werden.

Die vorgesehene automatische Zustellung der zu zerlegenden Lampen erfolgt mittels einer umlaufenden Fördereinrichtung, der die Lampen zugeführt werden. Bei der großen Typenvielfalt der zu verarbeitenden Lampen, deren Außenkolben, Entladungsgefäße und Sockelteile sich in weiten Bereichen bezüglich ihrer Geometrie unterscheiden, wird das Sockelteil mit einer flexiblen Haltevorrichtung vollständig umfasst, die sich den unterschiedlichen Sockelgeometrien anpasst. In verschiedenen Arbeitsstationen werden Außenkolben, Entladungsgefäß, induktives Vorschaltgerät usw. im Bereich des Nullpunktes abgetrennt und materialspezifisch aufgefangen, abgefüllt oder weiterverarbeitet. Zum Schluss gibt die flexible Haltevorrichtung das Sockelteil frei, das abgefüllt oder weiterverarbeitet wird.

Umgekehrt, wenn die Lampe nur aus Sockelteil und Entladungsgefäß besteht, kann auch das Entladungsgefäß von der flexiblen Haltevorrichtung umfasst und in einer Arbeitsstation das Sockelteil abgetrennt werden. Danach gibt die flexible Haltevorrichtung das Entladungsgefäß glassortenspezifisch zur Abfüllung oder Weiterverarbeitung frei.

In einer weiteren Variante werden gleichzeitig Sockelteil und Außenkolben von beiden Seiten von je einer flexiblen Haltevorrichtung umfasst, die sich variabel den unterschiedlichen Geometrien anpassen. Nach Trennung im Bereich des Nullpunktes wird der Außenkolben materialsortenspezifisch von der flexiblen Haltevorrichtung zur Abfüllung oder weiteren Verarbeitung freigegeben. Der Rest der Lampe verbleibt, durch die flexible Haltevorrichtung am Sockelteil eingespannt, zur weiteren Bearbeitung in der Anlage. Als nächstes umfasst eine flexible Haltevorrichtung das Entladungsgefäß. Nach Trennung im Bereich des Nullpunktes und Abführen des Entladungsgefäßes wiederholt sich der gleiche Prozess mit dem induktiven Vorschaltgerät usw. Besteht die Lampe nur aus Entladungsgefäß und Sockelteil, läuft der Prozess nur einmal ab.

Durch die erfindungsgemäßen flexiblen Haltevorrichtungen kann das Verfahren in einfachster Weise den unterschiedlichsten Formen der zu verarbeitenden Gebrauchsgegenstände wie Lampentypen angepasst werden.

Mit besonderem Vorteil wird erfindungsgemäß jede Lampe in flexiblen Haltevorrichtungen in einer umlaufenden Fördereinrichtung in orientierter Stellung erfasst und festgespannt. Die Aufnahme der Lampen in den erfindungsgemäßen flexiblen Haltevorrichtungen ist optimal.

Durch die flexible Ausgestaltung der erfindungsgemäßen Haltevorrichtungen ist eine Umstellung dieser Haltevorrichtungen für jede Lampe anderer Geometrie nicht notwendig.

Ein weiterer Vorteil der erfindungsgemäßen flexiblen Haltevorrichtungen ergibt sich aus der Tatsache, dass die umfassten Teile nach dem Trennvorgang zunächst weitgehend vollständig in der Haltevorrichtung verbleiben und anschließend durch Öffnen der Haltevorrichtung gezielt materialsortenspezifisch freigegeben werden. Das ist insbesondere für die sortenreine Rückgewinnung hochwertiger Sekundärrohstoffe und deren Wiedereinsatz für neue Produkte wichtig. Die sonst übliche Materialvermischung, die beim Abtrennen von spröden Materialien wie Glas durch herumfliegende Partikel entsteht, entfällt. Gleichzeitig werden Schadstoffe wie z.B. Quecksilber zusammen mit den abgetrennten Materialteilen in den Haltevorrichtungen zurückgehalten, um dann gezielt zusammen mit den Materialteilen wie z.B. Entladungsgefäß, in den sie enthalten sind, abgeführt und entsorgt werden. Eine Vermischung der Schadstoffe mit anderen, vorher nicht belasteten Teilen wie z.B. Sockelteil wird im Gegensatz zu heute üblichen Shredder-Trenn-Verfahren weitgehend vermieden.

Die erfindungsgemäßen flexiblen Haltevorrichtungen gestatten außerdem durch Erhöhen des Innendruckes ein mechanisches Zerkleinern und Abtrennen von spröden Materialien wie z.B. Glas ohne den Einsatz von zusätzlichen Abtrenn- und Zerkleinerungseinrichtungen. Bei Verwendung von zwei flexiblen Haltevorrichtungen gleichzeitig, ist nach dem Einspannen des zu zerlegenden Gegenstandes z.B. der Lampe eine einfache mechanische Trennung zwischen den unterschiedlichen Teilen wie z.B. Entladungsgefäß und Sockelteil durch Verdrehen oder Knicken der flexiblen Haltevorrichtungen gegeneinander oder Auseinanderziehen derselben ohne zusätzliche Trennvorrichtung zu erreichen.

Nach Aufnahme in die flexiblen Haltevorrichtungen können für das Zerlegen der Lampen auch zusätzliche Trennvorrichtungen benutzt werden. Dabei werden z.B. nach einer Glassortenerkennung der Außenkolben und/oder das Entladungsgefäß an glassortenspezifischen Arbeitsstationen im Bereich des Nullpunktes durch Trennschleifen, mittels Hitze, z.B. durch einen erhitzten Draht, eine erhitzte Manschette, durch eine Flamme bzw. durch einen Flammenkranz, durch einen Schlag auf eine Stelle hoher Spannung im Glas oder geringer Materialstärke, insbesondere am Sockelrand abgetrennt. Eine derartige Abtrennung in der Abtrennstation hat zur Folge, dass ein weitgehend glattes Abringeln des Entladungsgefäßes vom Sockelteil eintritt. Am Sockelteil bleiben fast keine Teile des Entladungsgefäßes zurück.

Der abgetrennte Außenkolben und/oder das abgetrennte Entladungsgefäß werden, von der flexiblen Haltevorrichtung umfasst, zu einer nächsten Station, z.B. einem Behälter geführt und dort durch Öffnen der Haltevorrichtung zur Abfüllung oder Weiterverarbeitung freigegeben.

Die flexible Haltevorrichtung mit dem Sockelteil wird separat einer weiteren Verarbeitungsstation zugeführt bzw. es erfolgt die Freigabe des Sockelteils zur Abfüllung oder Weiterverarbeitung.

Besteht eine Lampe aus Außenkolben, Entladungsgefäß und weiteren Innenaufbauteilen wie z.B. Vorschaltgerät, wird die Lampe schrittweise unter Verwendung der flexiblen Haltevorrichtungen und der anderen oben beschriebenen Techniken zerlegt.

Mit besonderem Vorteil wird von einer zentralen programmierbaren elektronischen Steuereinheit die Zerlegung der Lampen in den Arbeitsstationen und die Zustellung der Lampen zu diesen gesteuert. Die Steuerung ermöglicht eine Optimierung der Leistung des Verfahrens. Wenn die Fördereinrichtung kontinuierlich ihre Bahn durchläuft, werden über die Steuereinheit die Arbeitsstationen synchron mit der Fördereinrichtung mitbewegt und zyklisch zurückgestellt.

Zur Zustellung der Lampen zu den Arbeitsstationen kann die Fördereinrichtung durch zentrale elektrisch- elektronische Steuerungen schrittgeschaltet sein oder durch mechanische Kurven-, Klinkenantriebs- oder Malteserkreuzsteuerungen erfolgen.

Die Außenkolben bzw. Entladungsgefäße von Lampen, die unterschiedliche Glassorten oder Plastik aufweisen, werden nach der Abtrennstation den Behältern zugefügt, die für die jeweilige Glassorte oder Plastiksorte vorgesehen sind.

Zur Durchführung der Glassortenerkennung kann insbesondere ein Verfahren zur Bestimmung der Materialeigenschaft von Werkstoffen unter Verwendung eines gepulsten, auf die Oberfläche fokussierten Laserstrahls verwendet werden. Der Laserstrahl erzeugt in zeitlichen Abständen ein Plasma, das eine für in diesem Plasma enthaltene Elemente oder Moleküle charakteristische Strahlung erzeugt, wobei diese Strahlung, in Form von Spektrallinien oder Molekülbändern von einer Detektoreinheit erfasst und ausgewertet wird. Ein derartiges Verfahren wird beispielsweise in der DE 4 004 647 A1 beschrieben.

Einer Erkennung der Plastiksorte erfolgt mittels Infrarot-Spektroskopie ähnlich der Glaserkennung.

Bewertungskriterien für die Eingruppierung der Glassorten in Klassen sind die gemessenen Konzentrationen bestimmter für die Glassorte relevanter Elemente, z.B. von Blei, Bor, Aluminium und Barium.

Da die Notwendigkeit besteht, auch Lampen zu zerlegen deren Glassorten oder Plastiksorten nicht vom Erkennungsprogramm erfasst werden, bzw. deren Glassorten oder Plastiksorten nicht separiert werden sollen, werden die Außenkolben dieser Lampen einer separaten den glassortenspezifischen oder plastikspezifischen Abtrennstationen vor-, zwischen-, oder nachgeordneten Abtrennstation zugeführt, sodass die Sortenreinheit erhalten bleibt.

Die erfindungsgemäße flexible Haltevorrichtung für das Entladungsgefäß, den Außenkolben und/oder das Sockelteil besteht aus einem doppelwandigen flexiblen Hohlgefäß, vorzugsweise einem Hohlzylinder. Dieses doppelwandige flexible Hohlgefäß wird über das jeweilige Lampenteil gefahren. Dann wird zwischen die beiden Wände des Hohlgefäßes Gas oder Flüssigkeit unter erhöhtem Druck gefüllt. Die insbesondere flexible Innenseite der Haltevorrichtung passt sich dabei den Konturen des jeweiligen umfassten Teiles an und hält dieses für die Zuführung zu den einzelnen Arbeitsstationen fest.

Nach der Trennung und notwendigen Bearbeitung werden die einzelnen flexiblen Haltevorrichtungen über die jeweiligen Sammelbehälter geführt und dort durch Ablassen des Druckes geöffnet. Der Inhalt der flexiblen Haltevorrichtung fällt in die bereitstehenden Sammelbehälter.

Bei einer anderen Variante der flexiblen Haltevorrichtung besteht diese aus elastischen Platten oder mit Gas oder Flüssigkeit unter erhöhtem Druck gefüllten elastischen Kissen, die zum Halten eines Gegenstandes gegeneinander gefahren werden.

Durch die Elastizität der Platten bzw. der Kissen werden auch hier die einzelnen Teile des Entladungsgefäßes einschließlich der Schadstoffe wie Quecksilber bei der Zerlegung einwandfrei gehalten, da eine Anpassung an die unterschiedlichen Oberflächenkonturen der jeweiligen Teile der Gegenstände, wie Lampen, gegeben ist. Das Bearbeiten der Lampen erfolgt in der vorher beschriebenen Weise.

Selbstverständlich können die erfindungsgemäßen flexiblen Haltevorrichtungen nicht nur beim Lampenrecycling eingesetzt werden, sondern auch bei allen anderen Gebrauchsgegenständen, die in irgendeiner Weise zu bearbeiten sind.

Vorzugsweise ist unter den Abtrennstationen für die Außenkolben bzw. Entladungsgefäße ein Brecher oder ein Mahlwerk angeordnet, in dem der Gegenstand zur Volumenreduzierung zerbrochen wird, wobei hier bereits teilweise die Leuchtstoffbeschichtung vom Glas des Entladungsgefäßes entfernt wird.

Die Abtrennstationen und die Brecher werden von Luft durchströmt, wodurch Leuchtstoffe, lichtstreuender Belag oder andere pulver- und staubförmigen Materialien sowie umweltrelevante Stoffe abgesaugt werden. Durch Filter werden diese anschließend aus der Luft entfernt.

Eine andere Variante der Abtrennung und gleichzeitigen Zerkleinerung des Außenkolbens bzw. Entladungsgefäßes wird dadurch erreicht, dass der Innendruck in den als flexible Haltevorrichtungen verwendeten doppelwandigen Hohlkörper oder elastischen Platten erhöht wird, bis das Entladungsgefäß bzw. der Außenkolben zerbricht. Das gleiche kann durch Verdrehen oder Knicken der flexiblen Haltevorrichtungen gegeneinander erreicht werden.

Eine weitere Möglichkeit der Abtrennung und gleichzeitigen Zerkleinerung der Glasteile sieht vor, dass auf die Außenkolben bzw. Entladungsgefäße eine mechanische Kraft einwirkt. Dazu kann z.B. eine geeignete Walze längs oder quer zu einer in einer flexiblen Haltevorrichtung am Sockelteil gehaltenen Lampe geführt werden.

Bei einer Anlage zur Durchführung des Verfahrens ist eine an Arbeitsstationen vorbeiführende, als endlos umlaufender Förderer oder Drehtisch oder Karussell ausgebildete Fördereinrichtung vorgesehen. In der ersten Arbeitsstation ist eine Anordnung zur Ermittlung der Glaszusammensetzung des Außenkolbens bzw. Entladungsgefäßes vorgesehen. Entsprechend der zu erwartenden unterschiedlichen Glassorten sind mehrere, den erkannten Glassorten zugeordnete Abtrennstationen des Außenkolbens bzw. Entladungsgefäßes sowie eine Abtrennstation für nicht erkannte Glassorten bzw. für Glassorten, die nicht separiert werden sollen, nachgeordnet.

Die Bahn des endlos umlaufenden Förderers kann einen polygonalen oder kreisförmigen Grundriss aufweisen, oder als ein Endlosband oder eine Endloskette mit zwei zueinander parallelen Fördertrumen ausgebildet sein. An diesen Endlosförderern sind in Förderrichtung im Abstand voneinander die flexiblen Haltevorrichtungen angeordnet.

Die flexiblen Haltevorrichtungen können auch an Roboterarmen befestigt sein, die nach dem Trennvorgang das umfasste Material sortenspezifisch zur getrennten Abfüllung oder Weiterverarbeitung ablegt.

In der Ausführungsform als Karussell oder Drehtisch sind flexible Haltevorrichtungen an deren Umfang angeordnet, ggf. an Roboterarmen.

Von den in der Förderbahn vorgesehen Arbeitsstationen ist zumindest eine als Außenkolbenabtrennstation ausgebildet.
Die umlaufende Fördervorrichtung verläuft vorzugsweise in horizontalen Ebenen.

Die flexible Abtrennstation für die Außenkolben bzw. die Entladungsgefäße der Lampen, deren Glassorten nicht vom vorgegebenen Erkennungsprogramm erfasst werden bzw. nicht separiert werden sollen, kann vor, zwischen oder nach den glassortenspezifischen Abtrennstationen angeordnet sein.

Mit besonderem Vorteil weisen die flexiblen Haltevorrichtungen eine die Lampe auf zumindest drei vorzugsweise vier Seiten umgebene Abschirmung auf. Durch diese Abschirmung wird beim Zerlegen der Lampen die Glassortenreinheit sichergestellt, da keine Splitter in Arbeitsbereiche gelangen können, die einer anderen Glassorte zugeordnet sind. Außerdem verbleibt das umweltrelevante Quecksilber innerhalb der Abschirmung bzw. der Fraktion.

Bei einer vorzugsweisen Ausgestaltung des Verfahrens werden die Haltevorrichtungen nach der Aufnahme der zu recycelnden Lampen so ausgerichtet, dass die Lampen für die Bearbeitung horizontal zu liegen kommen.

Gleichzeitig kann bei der Trennung des Entladungsgefäßes vom Sockelteil ein starker Gasstrom auf die Trennstelle gerichtet werden. Beide vorzugsweise Ausgestaltungen des Verfahrens tragen dazu bei, dass Teile des Fußglases bzw. der Elektroden oder Sockelbestandteile nicht in den Auffangbehälter mit dem Glas des Entladungsgefäßes gelangen.

Mit den eventuell auftretenden Glassplittern werden selbstverständlich auch entweichende Leuchtstoffe und Quecksilber abgeblasen. Diese werden durch Abfilterung zusammen mit den Glassplittern aus der Luft separiert.

Die vorbeschriebene Arbeitsweise kommt insbesondere dann in Betracht, wenn bei der Bearbeitung der Lampen nur das Sokkelteil eingespannt wird, da dann die Trennung von Sockelteil und Entladungsgefäß direkt über dem jeweiligen Sammelgefäß für die vorher ermittelte Glassorte des Außenkolbens bzw. Entladungsgefäßes erfolgen muss.

Die Werkzeuge oder Geräte zur Zerlegung der Lampen sind an den Bearbeitungsstationen auf Zustellschlitten gelagert, die zur Lampe hin und von dieser fortbewegbar sind oder werden an Roboterarmen befestigt.

Werden die Glaskolben bzw. Entladungsgefäße nicht direkt in der erfindungsgemäßen flexiblen Haltevorrichtung zerkleinert, ist in vorteilhafter Weise jeder Abtrennstation eine Zerkleinerungseinrichtung, z. B. ein Brecher, zugeordnet.

Für die Glassortenerkennung ist eine Messanordnung vorgesehen, bei der einem Impulslaser ein teildurchlässiger Spiegel zugeordnet ist. Als Impulslaser ist vorzugsweise ein Nd: YAG-Impulslaser mit einer Wellenlänge von 1064 nm und als halbdurchlässiger Spiegel ein dichroitischer Hochleistungslaserspiegel vorgesehen. Mittels der Messanordnung werden Strahlungsimpulse des Impulslasers auf die Glaskolben fokussiert, Glasbestandteile verdampft und in einem Luftplasma angeregt. Zeitlich verzögert zu den Laserimpulsen werden die Spektrallinien der angeregten Atome im Plasma vermessen. Aus der Stärke der Spektrallinien der Glasbestandteile wird auf die Glaszusammensetzung geschlossen. Die Auswertung erfolgt über einen Rechner. Nach der Glasanalyse und der Glasklassifikation werden an den für die jeweilige Glassorte angeordneten Abtrennstationen die Entladungsgefäße entsprechend der jeweiligen Bewertung abgetrennt.

Die Erfindung soll nachfolgend an einem Ausführungsbeispiel anhand der Zeichnungen näher erläutert werden.

Es zeigen:
- Fig. 1:: eine schematische Darstellung der Zerlegung einer Lampe in ihre Komponenten zur Rückgewinnung der Wertstoffe
- Fig. 2:: eine schematische Darstellung einer Ausführungsform der Vorrichtung zum Zerlegen von Lampen
- Fig. 3:: eine Halteanordnung für die zu zerlegenden Lampen
- Fig. 4:: eine weitere Ausgestaltung der Haltevorrichtung für die zu zerlegenden Lampen.

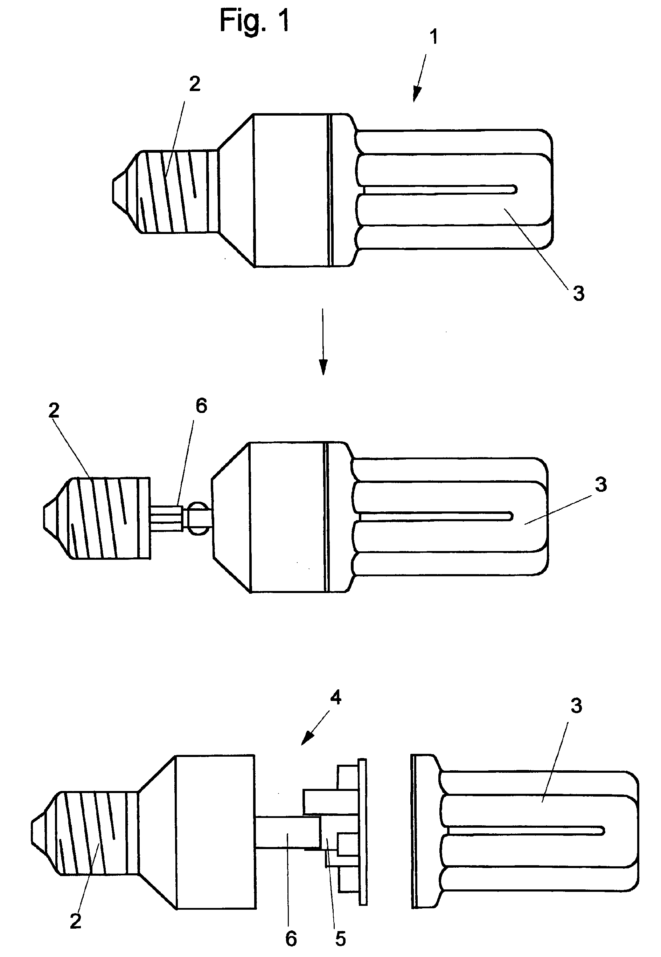

Beim Verfahren zum Zerlegen von Lampen wird, wie in Fig. 1 gezeigt, zunächst der aus Glas bestehende Außenkolben 3 vom Sockelteil 2 getrennt. Der Außenkolben wird gebrochen. Das Glas wird z. B. in einem Schwingfließbett von der Beschichtung befreit und der Glasbruch einer Glashütte zugeführt. Die Beschichtung wird z. B. in seltenerdaktive Leuchtstoffe und inertes lichtstreuendes Pulver getrennt und verwertet.

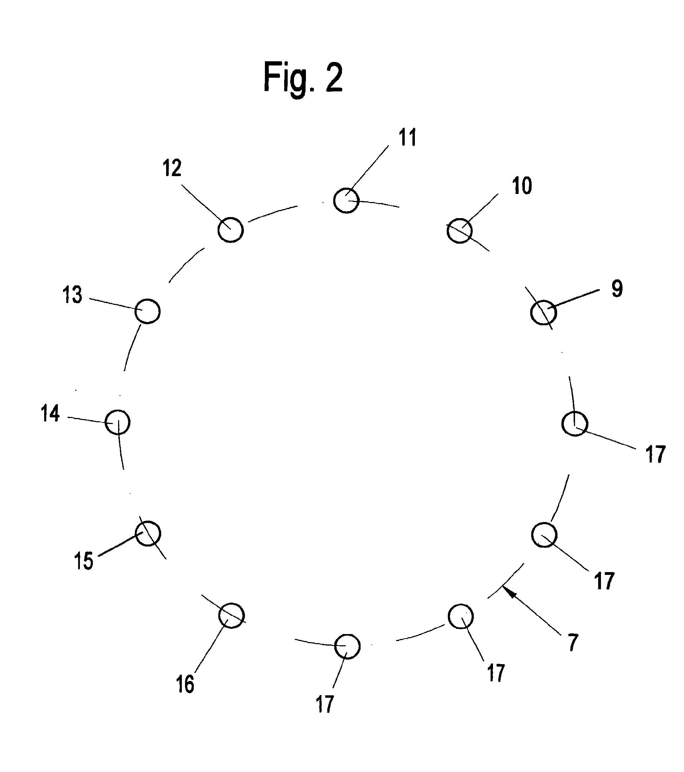

In Fig. 2 ist schematisch eine umlaufende Fördereinrichtung 7 dargestellt. Diese Fördereinrichtung 7 kann ein endloser umlaufender Band- oder Kettenförderer sein, dessen Förderbahn einen kreisförmigen Grundriss aufweist. Anstelle des kreisförmigen Grundrisses, der dargestellt ist, könnte dieser Grundriss auch polygonal sein.

An dieser Fördereinrichtung 7 sind Haltevorrichtungen 8 für die Lampen angeordnet. Bei der in Figur 2 dargestellten Vorrichtung werden die Lampen 1, die zerlegt werden sollen, in vier schematisch dargestellte Haltevorrichtungen 8 eingesetzt. Die fortlaufend in die Lampeneinsetzpositionen 17 eingesetzten Lampen 1 werden von der Fördereinrichtung 7 den Arbeits- oder Bearbeitungsstationen 9 bis 16 zugestellt. Diese Zustellung kann, von einer programmierbaren Steuereinheit beeinflusst, kontinuierlich erfolgen. Bei einer kontinuierlichen Zustellung werden die Bearbeitungsstationen zur Durchführung der entsprechenden Bearbeitungsschritte synchron mit der Fördereinrichtung 7 in gesteuerter Weise mitbewegt und nach Durchführung der Arbeiten wieder zurückgestellt.

Beim dargestellten Ausführungsbeispiel erfolgt die Zustellung schrittweise, d.h. die Fördereinrichtung 7 wird von einer zentralen Steuereinheit zum Zustellen der Lampen schrittweise geschaltet. Diese zentrale Steuereinheit wird gleichzeitig dazu verwendet, in den Bearbeitungsstationen die Bearbeitungsschritte zu steuern.

Bei dem beschriebenen Ausführungsbeispiel wird davon ausgegangen, dass die zu zerlegenden Entladungsgefäße unterschiedliche Glassorten aufweisen.

Um sortenreines Bruchglas zu erhalten, werden die zu zerlegenden Lampen speziell den Abtrennstationen 10-13 zugeführt. Die Entladungsgefäße der Lampen 1, die aus zwei verschiedenen Glassorten bestehen, werden in den schematisch angedeuteten Abtrennstationen 10, 11 und 12 bearbeitet, wobei jeder speziellen Glassorte eine Abtrennstation zugeordnet ist.

Bei dieser Ausführungsform werden die in den Lampeneinsetzpositionen 17 in die Haltevorrichtungen 8 eingesetzten Lampen 1 zunächst schrittweise einer Glaserkennungsstation 9 zugeführt. In dieser Glaserkennungsstation 9 wird ein optisches Glaserkennungsverfahren angewandt. Eine Laserstrahlung eines Nd: YAG-Impulslasers mit einer Wellenlänge von 1064 nm wird über eine Fokussieroptik und einen dichroitischen Hochleistungslaserspiegel auf einen Glaskolben in der Glaserkennungsstation 9 gelenkt und ein Plasma erzeugt. Die Strahlungsemission aus dem Plasma wird über den Hochleistungslaserspiegel und Linsen auf das Ende eines Lichtfaserbündels fokussiert. Der Spiegel ist für den ultravioletten und sichtbaren Anteil der Strahlung transparent. Das Lichtleitfaserbündel leitet die Strahlungsemission von dem Probenplasma zu dem Eintrittsspalt des Spektrographen, an dessen Ausgang eine Fotodetektorzeile angeordnet ist. Das auf der Zeile abgebildete Spektrum wird abgenommen und die gemessenen Intensitäten einem Auswertesystem übermittelt. Das Auswertesystem wird durch ein Steuerungssystem synchronisiert.

Die erhaltenen analytischen Messergebnisse der einzelnen Glaskolben werden zur Klassifizierung in einzelne Glassorten herangezogen. Es erfolgt eine Eingruppierung in die gewünschten Klassen, die an den Abtrennstationen abgetrennt werden. Bewertungskriterien für die Eingruppierung sind die gemessenen Konzentrationen von z.B. Blei, Bor, Aluminium und Barium.

Die erfindungsgemäße Haltevorrichtung 8 die aus einem doppelwandigen Hohlzylinder besteht, wird über das Sockelteil 2 der Lampe 1 geführt und danach durch unter Druck stehendes Gas oder Flüssigkeit fest an den Sockel gepresst. Dabei passt sich die flexible Haltevorrichtung 8 der äußeren Form des Sockelteils 2 an und hält damit die Lampe für die nachfolgenden Bearbeitungsschritte fest. Sind alle notwendigen Arbeitsschritte durchlaufen, wird der Druck abgelassen und das Sockelteil fällt aus der Haltevorrichtung 8 heraus.

Selbstverständlich kann neben der Halterung des Sockelteils 2 zusätzlich auf die gleiche Weise durch eine weitere Haltevorrichtung 8 auch der Außenkolben und/oder das Entladungsgefäß der Lampe 1 gehalten werden.

Diese Variante ist besonders dann von Vorteil, wenn der Außenkolben bzw. das Entladungsgefäß nach dem Abtrennen noch weitertransportiert werden soll.

Die Halterung der einzelnen Teile der Lampen 1 erfolgt so, dass die Bearbeitungszone für die Bearbeitungswerkzeuge frei zugänglich bleibt.

Bei einer anderen Ausgestaltung der Haltevorrichtung 8 besteht diese aus zwei oder mehr Platten mit elastischem Innenteil oder mit unter Druck stehenden Gasen oder Flüssigkeiten gefüllten Kissen die gegeneinander verschiebbar sind. Zum Erfassen des Sockelteils 2 und/oder des Außenkolbens bzw. Entladungsgefäßes werden die Teile der Haltevorrichtung 8 aufeinanderzu bewegt bis ein fester Halt erreicht ist. Danach kann die Lampe 1 den einzelnen Arbeitsstationen zugeführt werden.

Diese Ausführungsform der Haltevorrichtung kann auch gleichzeitig als Zerkleinerungsvorrichtung für den Außenkolben bzw. das Entladungsgefäß dienen. Nach Abtrennung des Sockelteils 2 kann in einer weiteren Arbeitsstation über den entsprechend der Glassorte ausgewählten Auffangbehälter der Druck auf die einzelnen Teile der Haltevorrichtung 8 erhöht werden, bis das Glas zerbricht. Eine zusätzliche Brechereinheit vor jedem Auffanggefäß der einzelnen Glassorten ist bei dieser Arbeitsweise nicht notwendig.

Diese Variante der Haltevorrichtung wird insbesondere dann zum Einsatz gelangen, wenn mehrere unterschiedliche Glassorten bei den zu recycelnden Lampen 1 zu erwarten sind.

Der Fig. 2 ist zu entnehmen, dass noch eine vierte Abtrennstation 3 vorgesehen ist. In dieser Abtrennstation werden diejenigen Entladungsgefäße abgetrennt, deren Glassorte nicht unter das eingegebene Programm fällt.

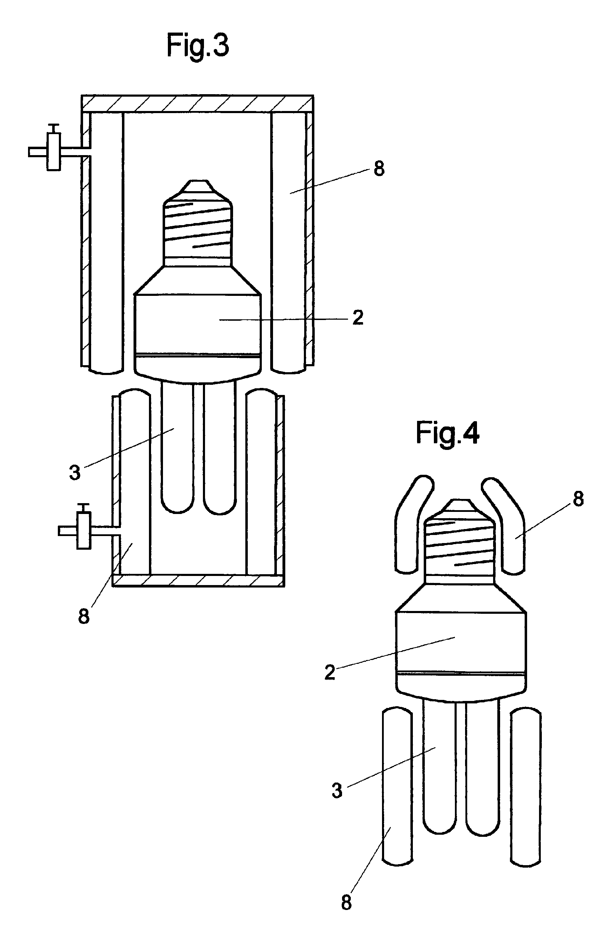

Die dargestellten vier Abtrennstationen 10 - 13 weisen den gleichen Aufbau auf. Wie Fig. 3 zeigt, werden in den Abtrennstationen 10 - 13 die am Sockelteil 2 in den Haltevorrichtungen 8 eingespannten Lampen 1 dadurch zerlegt, dass z.B. jeweils mindestens zwei zueinander einstellbare vorzugsweise zwei miteinander fluchtende Stößel, die bei 23 schematisch dargestellt sind, durch ein Kurzhubarbeitszylinder 22 derart angetrieben werden, dass sie das Glas am Sockelrand 24 zerschlagen. Die Glaszone am Sockelrand steht, bedingt durch die Fertigungstechnologie der Lampen, unter Spannung und ist besonders dünn. Deshalb wird das Entladungsgefäß 3 als Ganzes durch das Aufschlagen der Stößel 23 abgetrennt. Am Sockelteil 2 bleiben nur geringfügige Splitterteile des Entladungsgefäßes 3 zurück.

Das durch den Schlag der Stößel 23 abgetrennte Entladungsgefäß fällt in den Brecher.

Die Figur 3 zeigt Lampenaufnahmen 8, die die Lampe 1 sowohl am Sockelteil 2 als auch am Außenkolben oder Entladungsgefäß 3 umfassen. Die Lampenaufnahmen 8 mit den zu recycelnden Lampen sind auf vier Seiten mit Abschirmwandungen umgeben. Die Abschirmwandungen verhindern eine Vermengung unterschiedlicher Glassorten, sodass die Sortenreinheit in den einzelnen Abtrennstationen gewährleistet ist.

Die vier schematisch dargestellten Abtrennstationen sind eingehaust und an ein zentrales Absaug-/Filtersystem angeschlossen. Durch den durch die Absaugung entstehenden Unterdruck wird das Austreten von Stäuben der Lampenbeschichtung verhindert.

In einer weiteren Arbeitsstation wird das Gestell 4 vom Sockelteil 2 getrennt.

In der Arbeitsstation 6 wird durch Druckabbau in der Lampenaufnahme 8 das Sockelteil 2 freigegeben.

## Patentansprüche

1. Verfahren zum Recyceln von Lampen und von Teilen solcher Lampen durch Zerlegen in die verschiedenen Komponenten, wie Außenkolbenglas, Glas des Entladungsgefäßes, Sockelteil usw. und zur umweltverträglichen Entsorgung der umweltrelevanten Stoffe, wobei jede Lampe zunächst einer flexiblen Halteeinrichtung zugeführt wird und in dieser hintereinander angeordneten Arbeitsstationen zugestellt wird, **dadurch gekennzeichnet,**
**dass** die Lampen (1) am Sockelteil (2) und/oder am Außenkolben und/oder am Entladungsgefäß in einer flexiblen Haltevorrichtung (8) eingespannt, in bekannter Weise in einer ersten Arbeitsstation (9) einer Glassortenerkennung zugeführt werden, anschließend, falls vorhanden der Außenkolben und das Entladungsgefäß an glassortenspezifischen Abtrennstationen (10-13) vom Sockelteil (2) getrennt und zerkleinert werden und der Sokkelteil (2) aus der Haltevorrichtung (8) einer separaten Arbeitstation übergeben wird.

2. Verfahren nach Anspruch 1, **dadurch gekennzeichnet, dass** die zu recycelnden Lampen (1) orientiert den Halteeinrichtungen (8) zugeführt werden und für diese Orientierung als allgemeiner Bezugspunkt für alle Lampen (1) der Übergang vom Entladungsgefäß und/oder Außenkolben zum Sockelteil (2) dient.

3. Verfahren nach Anspruch 1 und 2, **dadurch gekennzeichnet, dass** das Einspannen des Sockelteils (2) und/oder des Außenkolbens und/oder des Entladungsgefäßes in die Haltevorrichtungen (8) so erfolgt, dass die für den Angriff der Bearbeitungswerkzeuge vorgesehenen Stellen an den Lampen (1) frei bleiben.

4. Verfahren nach mindestens einem der vorhergehenden Ansprüche, **dadurch gekennzeichnet, dass** die Haltevorrichtung (8) durch unter Druck stehende Gase an die Lampenteile gepresst wird.

5. Verfahren nach mindestens einem der Ansprüche 1 bis 3, **dadurch gekennzeichnet, dass** die Haltevorrichtung (8) durch unter Druck stehende Flüssigkeiten an die Lampenteile gepresst wird.

6. Verfahren nach mindestens einem der vorhergehenden Ansprüche, **dadurch gekennzeichnet, dass** die Auftrennung der Lampen durch bekannte thermische und/oder mechanische Verfahren an den Übergangsstellen Sockelteil/Glas erfolgt.

7. Verfahren nach mindestens einem der vorhergehenden Ansprüche, **dadurch gekennzeichnet, dass** während der Auftrennung die Trennstelle von einem Gasstrahl umströmt wird.

8. Verfahren nach mindestens einem der vorhergehenden Ansprüche, **dadurch gekennzeichnet, dass** das Zerbrechen der Glasteile der Lampen in den Haltevorrichtungen (8) erfolgt.

9. Verfahren nach mindestens einem der vorhergehenden Ansprüche, **dadurch gekennzeichnet, dass** das Zerbrechen der Glasteile durch Erhöhen des Innendrucks in den Haltevorrichtungen erfolgt.

10. Verfahren nach mindestens einem der Ansprüche 1 bis 8, **dadurch gekennzeichnet, dass** das Zerbrechen der Glasteile in den Haltevorrichtungen (8) durch mechanische Krafteinwirkung erfolgt.

11. Verfahren nach mindestens einem der vorhergehenden Ansprüche, **dadurch gekennzeichnet, dass** kompakte Leuchtstofflampen recycelt werden.

12. Verfahren nach mindestens einem der Ansprüche 1 bis 10, **dadurch gekennzeichnet, dass** Hochdruckentladungslampen recycelt werden.

13. Verfahren nach mindestens einem der Ansprüche 1 bis 10, **dadurch gekennzeichnet, dass** Leuchtstofflampen recycelt werden.

14. Vorrichtung zum Recyceln von in Komponenten aufzutrennende Gebrauchsgegenstände (Abfallprodukte) für deren Wertstoffrecycling unter Verwendung einer Fördereinrichtung und dieser zugeordneten hintereinander angeordneten Arbeitsstationen, **dadurch gekennzeichnet, dass** die Halteeinrichtungen (8) für die aufzutrennenden Gebrauchsgegenstände aus einem doppelwandigen Hohlgefäß, dass durch unter Druck stehende Gase oder Flüssigkeiten an die aufzutrennenden Gebrauchsgegenstände gepresst wird, besteht.

15. Vorrichtung zum Recyceln von Lampen oder Teilen davon in die Komponenten Außenkolbenglas und/oder Entladungsgefäßglas, Inneneinbauten, Sockelteil usw. für deren Wertstoff-Recycling und zur umweltverträglichen Entsorgung der umweltrelevanten Stoffe unter Verwendung einer Fördereinrichtung (7) und dieser zugeordnete hintereinander angeordnete Arbeitsstationen nach mindestens einem der Ansprüche 1 bis 13, **dadurch gekennzeichnet, dass** die Halteeinrichtungen (8) für die Lampen (1) aus einem doppelwandigen Hohlgefäß, das durch unter Druck stehendes Gas oder Flüssigkeit an das Sockelteil und/oder den Außenkolben und/oder Entladungsgefäß gepresst wird, besteht.

16. Vorrichtung nach Anspruch 14 und 15, **dadurch gekennzeichnet, dass** das doppelwandige Hohlgefäß ein doppelwandiger Hohlzylinder ist.

17. Vorrichtung zum Recyceln von Lampen und von Teilen solcher Lampen durch Zerlegen in die Komponenten Außenkolbenglas und/oder Entladungsgefäßglas, Inneneinbauten, Sockelteil usw. und zur umweltverträglichen Entsorgung der umweltrelevanten Stoffe, wobei jede Lampe zunächst einer Fördereinrichtung (7) zugefügt wird und in dieser hintereinander angeordneten Arbeitsstationen zugestellt wird, nach mindestens einem der Ansprüche 1 bis 13, **dadurch gekennzeichnet, dass** die Halteeinrichtung (8) für die Lampen (1) aus sich aufeinanderzu bewegenden Platten mit elastischer Innenseite (10) besteht.

18. Vorrichtung zum Recyceln von Lampen oder Teilen davon in die Komponenten Außenkolbenglas und/oder Entladungsgefäßglas, Inneneinbauten, Sockelteil usw., für deren Wertstoff-Recycling und zur umweltverträglichen Entsorgung der umweltrelevanten Stoffe unter Verwendung einer Fördereinrichtung (7) und dieser zugeordneten hintereinander angeordneten Arbeitsstationen nach mindestens einem der Ansprüche 1 bis 13, **dadurch gekennzeichnet, dass** die Halteeinrichtung (8) für die Lampen (1) aus sich aufeinanderzubewegbare mit unter Druck stehenden Gasen oder Flüssigkeiten gefüllten Kissen besteht.

19. Vorrichtung zum Recyceln von in Komponenten aufzutrennende Gebrauchsgegenstände (Abfallprodukte) für deren Wertstoff-Recycling unter Verwendung einer Fördereinrichtung und dieser zugeordneten hintereinander angeordneten Arbeitsstationen, **dadurch gekennzeichnet, dass** die Halteeinrichtung für die aufzubereitenden Gebrauchsgegenstände aus sich aufeinanderzubewegende Platten mit elastischer Innenseite bestehen.

20. Vorrichtung zum Recyceln von in Komponenten aufzutrennende Gebrauchsgegenstände (Abfallprodukte) für deren Wertstoff-Recycling unter Verwendung einer Fördereinrichtung und dieser zugeordneten hintereinander angeordneten Arbeitsstationen, **dadurch gekennzeichnet, dass** die Halteeinrichtung für die aufzutrennenden Gebrauchsgegenstände aus sich aufeinanderzubewegbare mit unter Druck stehenden Gasen oder Flüssigkeiten gefüllten Kissen besteht.
